# EUROPÄISCHE PATENTSCHRIFT

(11) **EP 1 212 605 B1**
(45) Veröffentlichungstag und Bekanntmachung des Hinweises auf die Patenterteilung: **05.01.2005**
(21) Anmeldenummer: 00962378.6
(22) Anmeldetag: 24.08.2000
(51) Int. Cl.: G01N 21/88

(54) **ANORDNUNG ZUR INSPEKTION VON MATTEN EBENEN UND/ODER LEICHT GEKRÜMMTEN OBERFLÄCHEN**
SYSTEM FOR INSPECTING MATT, FLAT AND/OR SLIGHTLY CURVED SURFACES
SYSTEME POUR L'INSPECTION DE SURFACES MATES PLANES OU LEGEREMENT COURBES

(30) Priorität: 28.08.1999 DE 19941028
(43) Veröffentlichungstag der Anmeldung: 12.06.2002
(73) Patentinhaber: Forchheim & Willing GmbH, 09221 Neukirchen b. Chemnitz (DE)
(72) Erfinder: WILLING, Achim, D-96110 Schesslitz-Doschendorf (DE)
(74) Vertreter: Pfenning, Meinig & Partner GbR
(86) Internationale Anmeldenummer: PCT/EP2000/008282
(87) Internationale Veröffentlichungsnummer: WO 2001/016584

(56) Entgegenhaltungen:
- EP-A- 0 374 977
- WO-A-98/08078
- DE-A- 4 012 372
- US-A- 5 237 404
- US-A- 5 414 518
- US-A- 5 627 646

## Beschreibung

Die Erfindung betrifft eine Anordnung zur Inspektion von matten ebenen und/oder leicht gekrümmten Oberflächen zur Erkennung von Fehlern, die mit einer Änderung des Verlaufs der Oberfläche verbunden sind, insbesondere zur Überprüfung matter, unbeschichteter Rohbaukarosserien.

Es sind Anordnungen zur Inspektion von matten ebenen und/oder gekrümmten Oberflächen zur Erkennung von Oberflächen bekannt, die streifenförmig Licht abstrahlende Flächen aufweisen, mit denen in Ausrichtung parallel zur Oberfläche unlackierte Metall- und Kunststoffoberflächen auf topographische Fehler abgemustert werden. Dies erfordert eine Lichteinstrahlung unter sehr flachen Einstrahlwinkeln von ca. 5°-10°, weil unter diesen Winkeln die Oberflächen sehr stark gerichtet reflektieren, während sie unter steileren Winkeln überwiegend diffus reflektieren. Derartige Beleuchtungsstreifen sind nur für kleine Oberflächenteile geeignet, oder es müssen Mittel vorgesehen werden, mit denen die Streifen relativ zur Oberfläche bewegt werden (WO 98/15815). Wenn jedoch mehrere Streifen zur Beleuchtung größerer Oberflächen aneinandergereiht werden, so werden näher an den Leuchten gelegene Flächenabschnitte der abzumusternden Oberfläche unter unerwünscht steilen Winkeln beleuchtet. Dies führt zu einer Verschleierung von Fehlern und erkennbaren Farben und Farbeffekten, die normalerweise bei Zuordnung zum beleuchtenden Streifen erkennbar wären. Weiterhin tritt das Problem der Direktblendung auf, da die Leuchten aufgrund ihrer zu breiten Lichtverteilung nicht nur in den gewünschten Richtungen auf die Oberfläche strahlen.

US 5 414 518 betrifft eine Vorrichtung und ein Verfahren zur Inspektion von reflektierenden Flächen, in Ausführungsbeispiele eines mit einem reflektierenden Material beschichteten Lehm- oder Tonmodell eines Autos. Das hochglänzende Modell wird mit langgestreckten Leuchtstofflampen beleuchtet, die sich als langgestreckte helle Streifen auf der hochglänzenden Fläche abbilden. Wenn die Fläche Fehler, wie Beulen oder Krümmungsänderungen aufweist, sind diese in den Bildern der Leuchtstofflampen erkennbar.

Aus der WO 98/08078 ist eine Vorrichtung zur visuellen Inspektion der Oberflächenbeschaffenheit insbesondere von lackierten Karosserien bekannt, bei der mehrere Leuchtelemente in fester Zuordnung zu der Abmusterungsfläche diese mit einer Hauptstrahlrichtung jeweils in schrägem Winkel beleuchten. Die Leuchtelemente sind mit Abschirmungen versehen, die ein Spiegeln der Leuchtelemente bei vorgegebenen Beobachtungswinkeln verhindern.

US 5 237 404 beschreibt eine Inspektionsvorrichtung zur Erfassung von Oberflächenfehlern bei großen gekrümmten, glänzenden Flächen, bei der die Fläche mit einem Änderungsmuster bestrahlt wird und eine Kamera das Bild des reflektierten Änderungsmusters aufzeichnet. Das aufgezeichnete Änderungsmuster wird auf Abweichungen untersucht.

Der Erfindung liegt daher die Aufgabe zugrunde, eine Anordnung zur Inspektion von matten ebenen und/oder leicht gekrümmten Oberflächen zu schaffen, die immer gleiche Beleuchtungsverhältnisse über eine beliebig große abzumusternde Oberfläche erzeugt, wobei die Lichtverteilung der Beleuchtung geeignet sein soll topographische Fehler einer ansonsten kontinuierlich verlaufenden Oberfläche deutlich erkennbar zu machen, wobei die Lichtausstrahlung auf den zur Beleuchtung der Oberfläche benötigten Raumwinkel begrenzt sein soll, um Blendung bei direktem Einblick auf die lichtabstrahlende Fläche zu vermeiden. Dabei soll die verwendete Beleuchtungsvorrichtung einfach in ihrem Aufbau sein.

Diese Aufgabe wird erfindungsgemäß durch die Merkmale des Hauptanspruchs gelöst.

Erfindungsgemäß besteht die Beleuchtungsvorrichtung aus einer Mehrzahl von im wesentlichen parallel zueinander angeordneten langgestreckten leuchtenden Flächen, die im wesentlichen alle die gleiche Lichtverteilung besitzen und die in Ebenen quer zur Längsrichtung der Flächen eng gebündelt ist, mit einem Öffnungswinkel kleiner als 15°, vorzugsweise 5° und noch bevorzugt kleiner als 2°, so daß sich eine im wesentlichen blattförmige Lichtverteilung ergibt, die das zu inspizierende Flächenelement auf der Oberfläche überdeckt. In Ebenen in Längsrichtung der Flächen weist die Beleuchtungsvorrichtung jeweils eine breitstrahlende Lichtverteilung auf. Die Beleuchtungsvorrichtung ist so angeordnet, daß der Winkel zwischen der Normalen des betrachteten Flächenelementes auf der Oberfläche und der Verbindungslinie zwischen dem betrachteten Flächenelement und irgendeinem Punkt auf der langgestreckten beleuchtenden Fläche größer ist als etwa 60°, vorzugsweise jedoch 75°, und der Beobachter, d.h. eine Person oder eine Kamera oder dergleichen befindet sich innerhalb oder zumindest in der Nähe des durch Reflexion der blattförmigen Lichtverteilung des mindestens einen langgestreckten beleuchtenden Streifens an dem zu inspizierenden Oberflächenteil. Aufgrund dieser Anordnung wird eine Beleuchtung erreicht, die keine versehentliche Blendung bei direktem Einblick auf die lichtabstrahlenden Flächen bewirkt und die eine gute Erkennbarkeit von Fehlern, die mit einer Änderung des Verlaufs der Oberfläche verbunden sind, gestattet.

Bei gleichem Beleuchtungsprinzip kann der Standort des Beobachters durch optische Mittel wie Spiegel, retroflektierende Folien oder Prismen verändert werden.

Durch die in den Unteransprüchen angegebenen Maßnahmen sind vorteilhafte Weiterbildungen und Verbesserungen möglich.

Vorzugsweise weist die verwendete Beleuchtungsvorrichtung eine lichtabstrahlende Ursprungsfläche auf, vor der ein Paket mit parallelen Lamellenflächen angeordnet ist, wobei die Hauptstrahlrichtung der Ursprungsfläche durch die Lamellenanordnung hindurchleuchtet. Die Ursprungsfläche weist eine gleichmäßige Leuchtdichteverteilung auf und strahlt in einem größeren Raumwinkelbereich Licht ab, als die Gesamtheit der langgestreckten lichtabstrahlenden Flächen am Ende des Lamellenpaketes. Die Lamellenanordnung ist hinsichtlich ihrer Geometrie, d.h. Abstand und Tiefe vorzugsweise so dimensioniert, daß der Öffnungswinkel quer zur Lamellenfläche kleiner als 15°, bevorzugt kleiner als 5° und besonders bevorzugt kleiner als 2° ist.

Vorzugsweise wird die Ursprungsfläche von nebeneinander liegenden langgestreckten Lichtquellen oder auch von mindestens einer langgestreckten Lichtquelle, die von einem wannenförmigen Reflektor umgeben wird, gebildet. Die langgestreckten Lampen können zum Beispiel Leuchtstofflampen oder linienförmige Glühlampen sein, deren Lichtverteilung automatisch breitstrahlend in Ebenen parallel zur Lampenachse ist. Es ist günstig, wenige Lampen zu benutzen und deren Lichtverteilung durch Reflektoren oder Linsen so auszurichten, daß der überstrahlte Raumwinkelbereich größer ist als der durch die gesamte Beleuchtungsvorrichtung geforderte Raumwinkel.

Die Oberflächen der Lamellen ist erfindungsgemäß diffus streuend mit geringerem gerichteten Reflexionsanteil oder gerichtet reflektierend mit kleinem Reflexionsgrad. Eine in einen engen Winkelbereich lückenlose Ausleuchtung ergibt sich erfindungsgemäß mit Oberflächen, die unter sehr flachen Einstrahlungswinkeln einen hohen Grad der gerichteten Reflexion besitzen und unter steileren Einstrahlungswinkeln in diffuse Reflexion übergehen. Dies sind beispielsweise lackierte Oberflächen oder metallische Oberflächen. Vorzugsweise sind die Oberflächen der Lamellen schwarz oder grau.

In einer bevorzugten Ausführungsform können die Lamellen auch entweder auf einer oder auf beiden Seiten optisch dicht auf Lichtleitplatten angeordnet sein, welche die Zwischenräume zwischen den Platten ausfüllen und polierte Lichteintritts- und Austrittsflächen besitzen.

Ausführungsbeispiele der Erfindung sind in der Zeichnung dargestellt und werden in der nachfolgenden Beschreibung näher erläutert. Es zeigen:
- Fig. 1:: eine schematische Ansicht der erfindungsgemäßen Anordnung,
- Fig. 2:: eine perspektivische Ansicht einer Beleuchtungsvorrichtung, die bei der erfindungsgemäßen Anordnung verwendet wird,
- Fig. 3:: einen Schnitt durch ein weiteres Ausführungsbeispiel einer Beleuchtungsvorrichtung, wie sie bei der erfindungsgemäßen Anordnung verwendet wird,
- Fig. 4:: eine Darstellung von Lichtverteilungen, wie sie bei einer Beleuchtungsvorrichtung entsprechend der Erfindung verwendet wird,
- Fig. 5:: die Darstellung einer blattförmigen Lichtverteilung entsprechend Fig. 4,
- Fig. 6:: Strahlengänge an den bei der Beleuchtungsvorrichtung nach der Erfindung verwendeten Lamellen und
- Fig. 7:: Strahlengänge entsprechend Fig. 6 bei anderen Einfallswinkeln.

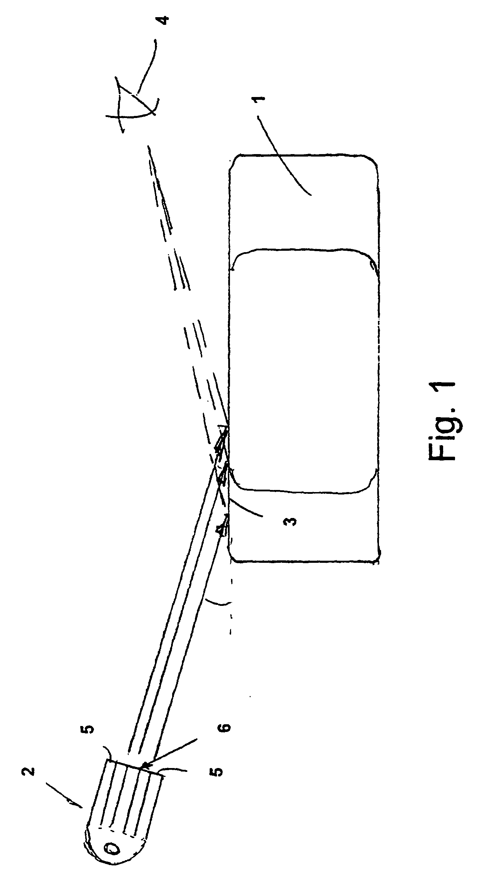

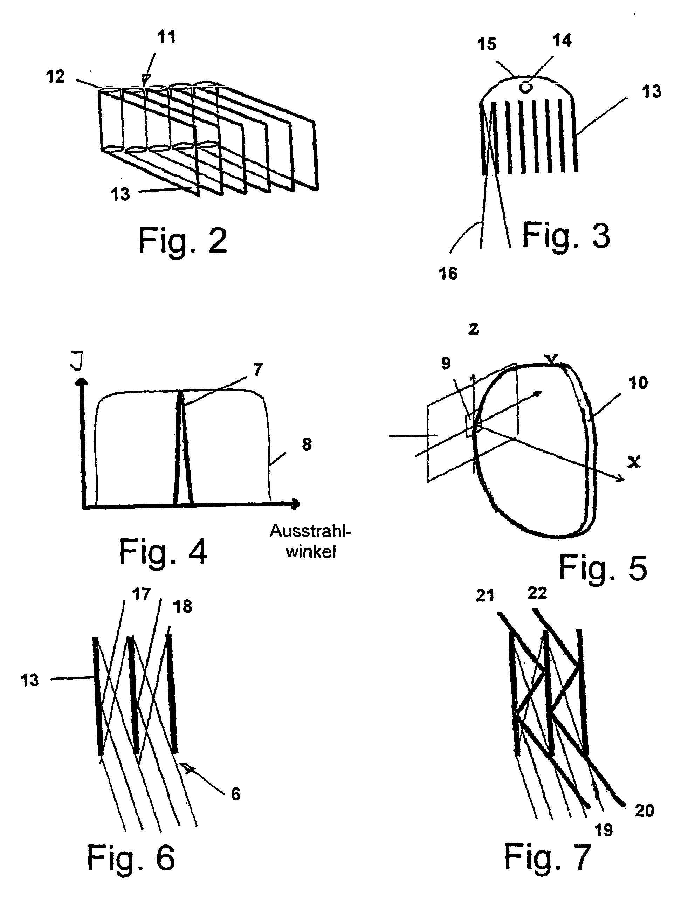

In Fig. 1 ist eine Anordnung zur Inspektion oder Seitenflächen von Rohbaukarosserien 1 dargestellt, bei der mindestens eine Beleuchtungsvorrichtung 2 eine Ebene oder leicht gekrümmte Oberfläche 3, die im dargestellten Ausführungsbeispiel in etwa senkrecht steht, beleuchtet und ein Beobachter 4, die beleuchtete Oberfläche auf Fehler, die mit einer Änderung des Verlaufs der Oberfläche verbunden sind, d.h. topographische Fehler inspiziert. Der Beobachter kann dabei eine Person sein, es kann auch eine Kamera oder auch eine sonstige Sensoranordnung zur Erfassung des Bildes der Oberfläche vorgesehen sein. Die Beleuchtung durch die Beleuchtungsvorrichtung 2 erfolgt unter flachem Winkel kleiner als 30° und vorzugsweise kleiner als 15°, d.h. größer als 60° zur Normalen der Oberfläche 3, vorzugsweise größer als 75°. Der Beobachter 4 befindet sich innerhalb oder in der Nähe des durch Reflexion der Lichtstrahlen der Beleuchtungsvorrichtung 2 vorgegebenen Winkels, d.h. etwa im Spiegelwinkel. Die Beleuchtungsvorrichtung 2 ist in verschiedenen Ausführungsformen in den Fign. 2 und 3 dargestellt, wobei die Lichtverteilung der Beleuchtungsvorrichtung in den Fign. 4 und 5 zu erkennen ist. Die Beleuchtungsvorrichtung 2 weist eine Mehrzahl von nebeneinander liegenden langgestreckten leuchtenden Flächen 5 auf, die zusammen die Lichtaustrittsfläche 6 der Beleuchtungsanordnung 2 bilden. Die Längsrichtung der leuchtenden Flächen 5 ist in Fig. 1 senkrecht zur Blattebene und in gleicher Längsrichtung, d.h. in einer Längsrichtung parallel zu der Längsrichtung der leuchtenden Flächen 5 liegt die zu inspizierende Oberfläche 3. Die Lichtverteilung jeder leuchtenden Fläche 5 ist in Fig. 4 und Fig. 5 dargestellt, wobei die Lichtverteilung 7 die Abstrahlung in Ebenen quer zur Längsrichtung der leuchtenden Fläche 5 angibt, während die Lichtverteilung 8 die breitstrahlende Abstrahlung in Ebenen in Längsrichtung der leuchtenden Fläche 5 darstellt. Ein Flächenelement 9 der leuchtenden Fläche 5 ist in Fig. 5 in einem x-, y- und z-Koordinatensystem dargestellt, das eine Lichtverteilung entsprechend Fig. 4 liefert. Dabei stellt z die Längsrichtung dar und es ist zu erkennen, daß das Licht in Ebenen quer zur Längsrichtung eng gebündelt ist, so daß sich im wesentlichen eine blattförmige Lichtverteilung 10 ergibt. Dabei ist der Öffnungswinkel in den Ebenen quer zur Längsrichtung kleiner als 15°, besser ist ein Öffnungswinkel von kleiner 5°, jedoch vorzugsweise kleiner als 2°.

Die leuchtenden Flächen 5, wie sie in Fig. 1 dargestellt sind, haben eine solche blattförmige Lichtverteilung 10, wobei das Licht somit in schmalen Streifen auf die Oberfläche 3 gestrahlt wird. Diese schmalen Streifen liegen auf der Oberfläche 3 quer zur Längsrichtung der Oberfläche, wobei sie vorzugsweise nur eine geringe Überlappung untereinander aufweisen. Die Streifen werden vom Beobachter 4 in einem Winkel beobachtet, der leicht abweichend vom Spiegelwinkel ist, aber in dessen Nähe liegt, da in diesem Falle topographische Fehler noch besser zu erkennen sind.

In Fig. 2 ist eine Beleuchtungsvorrichtung 2 dargestellt, deren leuchtende Ursprungsfläche 11 aus einer Mehrzahl von nebeneinander liegenden parallel zueinander ausgerichteten Lampen 12 in engem Abstand gebildet wird. Die leuchtende Ursprungsfläche 11 weist eine gleichmäßige Leuchtdichteverteilung auf, wobei die Lampen beispielsweise langgestreckte Leuchtstofflampen oder linienförmige Glühlampen oder dergleichen sind. Vor die Lampen sind eine Mehrzahl von parallel ausgerichteten Lamellen 13 zu einem Lamellenpaket angeordnet, die aufgrund ihrer Geometrie, d.h. ihres Abstandes voneinander und ihrer Tiefe den gewünschten Öffnungswinkel von kleiner 15°, besser 5°, vorzugsweise 2° bilden.

In Fig. 3 ist eine weitere Ausführungsform der in Fig. 1 verwendeten Beleuchtungsvorrichtung dargestellt, und zwar im Schnitt, wobei auch hier eine langgestreckte Lichtquelle 14 verwendet wird, die von einem Reflektor, der z.B. wannenförmig ausgebildet ist, umgeben ist. Dabei bildet die der Lampe 14 zugewandte Innenseite des Reflektors 15 die Ursprungsfläche, deren Leuchtdichte gleichmäßig verteilt ist. Vor dem Reflektor 15 ist wiederum ein Lamellenpaket aus Lamellen 13 angeordnet, wobei der Öffnungswinkel einer leuchtenden Fläche entsprechend der Lichtverteilung nach Fig. 5 durch die Lichtstrahlen 16 gegeben ist. Die ausgeleuchtete Fläche wird in diesem Fall immer wieder in schrägen Richtungen durch die Lamellen 13 unterbrochen.

Fig. 6 zeigt eine aus zwei Teilflächen bestehende ohne Unterbrechung ausgeleuchtete lichtabstrahlende Fläche 6 zwischen den Lamellen 13, von denen hier nur drei dargestellt sind. Diese gleichmäßige lichtabstrahlende Fläche 6 entsteht durch gerichtete Reflexion der Lichtstrahlen 17, 18 an den Lamellen 13 unter flachen Winkeln, so daß die zu inspizierende Oberfläche ebenfalls lückenlos ausgeleuchtet wird.

In Fig. 7 dagegen sind steilere Lichtstrahlen 19, 20 dargestellt, aus deren Richtung die Lamellenoptik nunmehr dunkel erscheint. Die Strahlen 19 und 20 entstehen durch Vielfachreflexionen der Strahlen 21 und 22, die außerdem unter steileren Lichteinfallswinkeln auftreffen, unter denen der Grad der gerichteten Reflexion abnimmt, so daß die Strahlen 19 und 20 praktisch keine Leuchtdichte mehr besitzen. Die bedeutet, daß der Beobachter 4, wenn er versehentlich direkt in die Beleuchtungsvorrichtung 2 entsprechend Fig. 1 blickt, nicht geblendet wird. Die Oberflächen der Lamellen sind vorzugsweise schwarz.

In einem weiteren Ausführungsbeispiel der Beleuchtungsvorrichtung, beispielsweise entsprechend Fig. 3, sind zwischen den Lamellen 13 lichtleitende transparente Platten vorgesehen, d.h. die Zwischenräume der Lamellen 13 sind mit einem lichtleitenden transparenten Medium ausgefüllt, wobei die Lamellenoberfläche zumindest auf einer Seite optisch dicht mit dem transparenten Medium bzw. den Lichtleitplatten verbunden ist. Dabei weisen die Lichtleitplatten polierte Lichteintritts- und Lichtaustrittsflächen auf.

## Patentansprüche

1. Anordnung zur Inspektion von matten ebenen und/oder leicht gekrümmten Oberflächen zur Erkennung von Fehlern, die mit einer Änderung des Verlaufs der Oberfläche verbunden sind, insbesondere zur Überprüfung matter unbeschichteter Rohbaukarosserien, bei der eine Beleuchtungsvorrichtung (2) die zu inspizierende Oberfläche (3) aus flachen Winkeln bestrahlt, mit den folgenden kombinierten Merkmalen:
die Beleuchtungsvorrichtung (2) wird aus einer Mehrzahl von im wesentlichen parallel zueinander angeordneten, langgestreckten leuchtenden Flächen (5) gebildet,
der Winkel zwischen der Normalen eines betrachteten Flächenelementes auf der Oberfläche und der Verbindungslinie zwischen dem betrachteten Flächenelement und einem Punkt auf einer der langgestreckten leuchtenden Flächen (5) ist größer als etwa 60°,
die Lichtverteilung der jeweiligen langgestreckten leuchtenden Flächen ist in Ebenen quer zur Längsrichtung der jeweiligen Fläche eng gebündelt mit einem Öffnungswinkel kleiner als 15°, derart, daß sich eine im wesentlichen blattförmige Lichtverteilung ergibt, die den zu inspizierenden Oberflächenteil überdeckt, und
der Beobachter (4) befindet sich innerhalb oder zumindest in der Nähe des durch Reflexion des von einer langgestreckten leuchtenden Fläche abgestrahlten Lichts an dem zu inspizierenden Oberflächenteil vorgegebenen Winkels.

2. Anordnung nach Anspruch 1, **dadurch gekennzeichnet, daß** der Öffnungswinkel der blattförmigen Lichtverteilung kleiner als 5°, vorzugsweise kleiner als 2° ist.

3. Anordnung nach Anspruch 1 oder Anspruch 2, **dadurch gekennzeichnet, daß** der Winkel zwischen der Normalen eines betrachteten Flächenelementes und dem Einfallslichtstrahl von der langgestreckten leuchtenden Fläche größer als 75° ist.

4. Anordnung nach einem der Ansprüche 1 bis 3, **dadurch gekennzeichnet, daß** die Längsrichtung der leuchtenden Flächen (5) im wesentlichen parallel mit der Längsrichtung der von dieser Fläche beleuchteten zu betrachtenden Oberfläche (3) ist.

5. Anordnung nach einem der Ansprüche 1 bis 4, **dadurch gekennzeichnet, daß** jedes zu inspizierende Oberflächenteil von einer langgestreckten leuchtenden Fläche (5) aus ihrer gesamten Länge und Breite beleuchtet wird.

6. Anordnung nach einem der Ansprüche 1 bis 5, **dadurch gekennzeichnet, daß** die leuchtenden langgestreckten nebeneinander angeordneten Flächen (5) in ihrer Bündelung so angeordnet sind, daß sie in gleicher Ausrichtung nebeneinander liegende zu inspizierende Oberflächen beleuchten.

7. Anordnung nach einem der Ansprüche 1 bis 6, **dadurch gekennzeichnet, daß** die Beleuchtungsvorrichtung (2) eine lichtabstrahlende Ursprungsfläche (11, 15) aufweist, die eine im wesentlichen gleichmäßige Leuchtdichteverteilung besitzt und daß vor dieser Ursprungsfläche eine Mehrzahl von im wesentlichen zueinander parallelen Lamellen (13) angeordnet ist, die aufgrund ihrer Geometrie den gewünschten Öffnungswinkel bestimmen.

8. Beleuchtungsvorrichtung nach Anspruch 7, **dadurch gekennzeichnet, daß** die Oberflächen der Lamellen (13) unter flachen Lichteintrittswinkeln einen hohen Reflexionsgrad der gerichteten Reflexion besitzen und unter steilen Lichteinfallswinkeln überwiegend diffus reflektieren.

9. Anordnung nach Anspruch 7 oder 8, **dadurch gekennzeichnet, daß** die Oberfläche der Lamellen (13) schwarz ist.

10. Anordnung nach einem der Ansprüche 7 bis 9, **dadurch gekennzeichnet, daß** die Zwischenräume der Lamellen (13) mit einem lichtleitenden transparenten Medium ausgefüllt sind und daß die Oberfläche der Lamellen (13) zumindestens auf einer Seite optisch dicht mit dem Medium verbunden ist.

11. Anordnung nach einem der Ansprüche 1 bis 10, **dadurch gekennzeichnet, daß** der Beobachter eine Person, eine Kamera oder eine sonstige Sensoranordnung zur Erfassung eines Bildes ist.

12. Anordnung nach einem der Ansprüche 1 bis 10, **dadurch gekennzeichnet, daß** die lichtabstrahlende Ursprungsfläche in einem Raumwinkel abstrahlt, der größer ist als der Raumwinkel der Abstrahlung der leuchtenden Flächen (5).

13. Anordnung nach einem der Ansprüche 1 bis 12, **dadurch gekennzeichnet, daß** die Beleuchtungsvorrichtung mindestens eine langgestreckte Lichtquelle (12, 14) aufweist, deren Lichtverteilung breitstrahlend in Ebenen parallel zu ihrer Achse ist.

14. Anordnung nach einem der Ansprüche 1 bis 13, **dadurch gekennzeichnet, daß** die Ursprungsfläche (12) aus einer Mehrzahl von nebeneinander angeordneten breitstrahlenden langgestreckten Lichtquellen zusammengesetzt ist, wobei vor jeder Lichtquelle mindestens ein Paar Lamellen (13) vorgesetzt ist.

15. Anordnung nach einem der Ansprüche 1 bis 13, **dadurch gekennzeichnet, daß** die Ursprungsfläche aus mindestens einer langgestreckten Lichtquelle (14) mit wannenartigem Reflektor (15) gebildet wird.

16. Anordnung nach einem der Ansprüche 1 bis 13, **dadurch gekennzeichnet, daß** der Standort des Beobachters durch optische Maßnahmen wie Spiegel, retroreflektierende Materialien oder Prismen verändert werden kann.

## Claims

1. System for inspecting matt, flat and/or slightly curved surfaces in order to identify defects which are associated with a modification of the course of the surface, in particular for examining matt unlacquered shell bodywork, in which system an illumination device (2) irradiates the surface (3) to be inspected at flat angles, said device having the following combined features:
the illumination device (2) is formed from a plurality of elongated luminous surfaces (5) which are disposed substantially parallel to one another,
the angle between the normal line of an inspected surface element on the surface and the connecting line between the inspected surface element and a point on one of the elongated luminous surfaces (5) is greater than approximately 60°,
the light distribution of the respective elongated luminous surfaces is tightly concentrated in planes which lie transversely with respect to the longitudinal direction of the respective surface, with an aperture angle which is smaller than 15°, in such a way that a substantially sheet-type light distribution is produced which covers the surface portion to be inspected, and the observer (4) is located within or at least in the proximity of the angle predetermined by reflection of the light radiated by one elongated luminous surface on the surface portion to be inspected.

2. System according to claim 1,
**characterised in that** the aperture angle of the sheet-type light distribution is smaller than 5°, preferably smaller than 2°.

3. System according to claim 1 or claim 2,
**characterised in that** the angle between the normal line of an inspected surface element and the incident light ray of the elongated luminous surface is greater than 75°.

4. System according to one of claims 1 to 3,
**characterised in that** the longitudinal direction of the luminous surfaces (5) is substantially parallel to the longitudinal direction of the surface (3) to be inspected which is illuminated by this luminous surface.

5. System according to one of claims 1 to 4,
**characterised in that** each surface portion to be inspected is illuminated by one elongated luminous surface (5) from its entire length and breadth.

6. System according to one of claims 1 to 5,
**characterised in that** the luminous elongated surfaces (5) disposed beside one another are so arranged in respect of their concentration that they illuminate adjacent surfaces to be inspected in the same alignment.

7. System according to one of claims 1 to 6,
**characterised in that** the illumination device (2) has a light-radiating original surface (11, 15) which has a substantially uniform luminance distribution and **in that** there is arranged in front of this original surface a plurality of lamellae (13) which are substantially parallel to one another and which determine the desired aperture angle on the basis of their geometry.

8. Illumination device according to claim 7,
**characterised in that** the surfaces of the lamellae (13) have a high reflection factor of the directed reflection at flat light entrance angles, and at steep light entrance angles reflect predominantly in a diffuse manner.

9. System according to claim 7 or 8,
**characterised in that** the surface of the lamellae (13) is black.

10. System according to one of claims 7 to 9,
**characterised in that** the gaps between the lamellae (13) are filled with a light-guiding transparent medium, and **in that** the surface of the lamellae (13) is connected to the medium in an optically dense manner at least on one side.

11. System according to one of claims 1 to 10,
**characterised in that** the observer is a person, a camera or some other sensor arrangement for capturing an image.

12. System according to one of claims 1 to 10,
**characterised in that** the light-radiating original surface radiates at a solid angle which is greater than the solid angle of the radiation of the luminous surfaces (5).

13. System according to one of claims 1 to 12,
**characterised in that** the illumination device has at least one elongated light source (12, 14), the light distribution of which radiates widely in planes parallel to its axis.

14. System according to one of claims 1 to 13,
**characterised in that** the original surface (12) is composed of a plurality of widely radiating, elongated light sources which are disposed beside one another, at least one pair of lamellae (13) being placed in front of each light source.

15. System according to one of claims 1 to 13,
**characterised in that** the original surface is formed from at least one elongated light source (14) with a trough-like reflector (15).

16. System according to one claims 1 to 13,
**characterised in that** the position of the observer can be altered by optical measures such as mirrors, retroreflective materials or prisms.

## Revendications

1. Dispositif pour l'inspection de surfaces mates planes et/ou légèrement cintrées pour l'identification de défauts, qui sont liés à une modification de la forme de la surface, notamment pour le contrôle d'ébauches de carrosserie mates, non pourvues d'un revêtement, dans lequel un dispositif d'éclairement (2) irradie la surface à inspecter (3) sous de faibles angles, présentant les caractéristiques suivantes combinées:
le dispositif d'éclairement (2) est formé par une multiplicité de surfaces éclairantes allongées (5), disposées essentiellement parallèles entre elles,
l'angle entre la normale d'un élément de surface considéré sur la surface et la droite reliant l'élément de surface considéré et un point situé sur l'une des surfaces éclairantes allongées (5) est supérieur à environ 60°,
la distribution de lumière des surfaces éclairantes allongées respectives est étroitement focalisée, dans des plans transversaux par rapport à la direction longitudinale de la surface respective, avec un angle d'ouverture inférieur à 15°, de telle sorte qu'on obtient une distribution de lumière essentiellement en forme de feuille qui couvre la partie à inspecter de la surface, et
l'observateur (4) est situé dans ou au moins à proximité de l'angle prédéterminé par la réflexion de la lumière, rayonnée par une surface éclairante allongée, sur la partie à inspecter de la surface.

2. Dispositif selon la revendication 1, **caractérisé en ce que** l'angle d'ouverture de la distribution de lumière en forme de feuille est inférieur à 5° et de préférence est inférieur à 2°.

3. Dispositif selon la revendication 1 ou la revendication 2, **caractérisé en ce que** l'angle entre la normale d'un élément de surface considéré et le faisceau lumineux incident de la surface éclairante allongée est supérieur à 75°.

4. Dispositif selon l'une des revendications 1 à 3, **caractérisé en ce que** la direction longitudinale des surfaces éclairantes (5) est sensiblement parallèle à la direction longitudinale de la surface (3) devant être observée, qui est éclairée par cette surface.

5. Dispositif selon l'une des revendications 1 à 4, **caractérisé en ce que** chaque partie à inspecter de la surface est éclairée par une surface éclairante allongée (5) sur toute sa longueur et sur toute sa largeur.

6. Dispositif selon l'une des revendications 1 à 5, **caractérisé en ce que** la focalisation des surfaces éclairantes allongées (5) disposées côte-à-côte est agencée de telle sorte que ces surfaces éclairent des surfaces à inspecter disposées côte-à-côte avec la même orientation.

7. Dispositif selon l'une des revendications 1 à 6, **caractérisé en ce que** le dispositif d'éclairement (2) comporte une surface initiale (11, 15) émettant une lumière, qui possède une distribution de densité d'éclairement sensiblement uniforme et qu'en avant de cette surface initiale sont disposées une multiplicité de lamelles (13) qui sont sensiblement parallèles entre elles et déterminent, sur la base de leur géométrie, l'angle d'ouverture désiré.

8. Dispositif d'éclairement selon la revendication 7, **caractérisé en ce que** les surfaces des lamelles (13) possèdent, sous de faibles angles d'entrée de la lumière, un degré de réflexion élevé pour la réflexion dirigée et réalisent une réflexion, qui est de façon prépondérante diffuse, sous des angles élevés d'incidence de la lumière.

9. Dispositif selon la revendication 7 ou 8, **caractérisé en ce que** la surface des lamelles (13) est noire.

10. Dispositif selon l'une des revendications 7 à 9, **caractérisé en ce que** les espaces intercalaires entre les lamelles (13) sont remplis par un milieu transparent réalisant un guidage de la lumière et que la surface des lamelles (13) est reliée au moins d'un côté, d'une manière dense du point de vue optique, au milieu.

11. Dispositif selon l'une des revendications 1 à 10, **caractérisé en ce que** l'observateur est une personne, un appareil de prise de vues ou un autre dispositif de détection servant à capter une image.

12. Dispositif selon l'une des revendications 1 à 10, **caractérisé en ce que** la surface initiale émettant une lumière émet dans un angle solide supérieur à l'angle solide du rayonnement des surfaces éclairantes (5).

13. Dispositif selon l'une des revendications 1 à 12, **caractérisé en ce que** le dispositif d'éclairement comporte au moins une source de lumière allongée (12, 14), dont la distribution de lumière intervient avec une émission de rayonnement large dans les plans parallèles à son axe.

14. Dispositif selon l'une des revendications 1 à 13, **caractérisé en ce que** la surface initiale (12) est constituée d'une multiplicité de sources de lumière allongées, qui réalisent une émission de rayonnement large et sont disposées côte-à-côte, au moins une paire de lamelles (13) étant disposées en avant de chaque source de lumière.

15. Dispositif selon l'une des revendications 1 à 13, **caractérisé en ce que** la surface initiale est formée par au moins une source de lumière allongée (14), avec un réflecteur (15) en forme de cuvette.

16. Dispositif selon l'une des revendications 1 à 13, **caractérisé en ce que** l'emplacement de l'observateur peut être modifié à l'aide de dispositions optiques comme par exemple des miroirs, des matériaux rétroréfléchissants ou des prismes.
